(19) **Europäisches Patentamt / European Patent Office / Office européen des brevets**

(11) **EP 2 083 291 B1**

(12) **EUROPEAN PATENT SPECIFICATION**

(45) Date of publication and mention
of the grant of the patent:
**04.07.2012 Bulletin 2012/27**

(51) Int Cl.:
***G02B 6/02*** (2006.01)

(21) Application number: **09160141.9**

(22) Date of filing: **12.07.2005**

(54) **Low bending loss multimode holey fiber**

Multimode mikrostrukturierte Faser mit geringem Krümmungsverlust

Fibre à trous multimode à faible perte en courbure

(84) Designated Contracting States:
**DE FR GB IT**

(30) Priority: **13.07.2004 JP 2004205819**
**27.09.2004 JP 2004279453**

(43) Date of publication of application:
**29.07.2009 Bulletin 2009/31**

(62) Document number(s) of the earlier application(s) in
accordance with Art. 76 EPC:
**05760182.5 / 1 788 415**

(73) Proprietor: **Fujikura, Ltd.**
**Tokyo 135-8512 (JP)**

(72) Inventors:
• **Guan, Ning**
**Chiba-Ken 2858550 (JP)**
• **Takenaga, Katsuhiro**
**Chiba-Ken 2858550 (JP)**

• **Izoe, Katsuaki**
**Chiba-Ken 2858550 (JP)**
• **Aikawa, Kazuhiko**
**Chiba-Ken 2858550 (JP)**
• **Himeno, Kuniharu**
**Chiba-Ken 2858550 (JP)**

(74) Representative: **Cabinet Plasseraud**
**52, rue de la Victoire**
**75440 Paris Cedex 09 (FR)**

(56) References cited:
**EP-A- 1 130 427    EP-A- 1 482 606**
**WO-A-02/12931    JP-A- 2004 226 541**

• **NING GUAN ET AL.: "hole-assisted holey optical fibers for low bending loss" IEICE TECHNICAL REPORT, vol. 104, no. 64, 20 May 2004 (2004-05-20), pages 27-30, XP008097024**

**Description**

BACKGROUND OF THE INVENTION

Field of the Invention

The present invention relates to a hole-assisted holey fiber having holes disposed around a core region. The hole-assisted holey fiber of the present invention is employed in the field of optical communications or the like, and exhibits low bending loss, making it more suitable for a user's on-site wiring than conventional single-mode optical fibers.

Furthermore, the present invention is relates to a low-bending loss multimode holey fiber that exhibits low bending loss characteristics even with a very small bending radius.

Priority is claimed on Japanese Patent Application No. 2004-205819, filed July 13, 2004, and Japanese Patent Application No. 2004-279453, filed September 27,2004.

Description of Related Art

House wiring optical fibers used for the FTTH (fiber to the home) technique desirably have excellent bending loss characteristics when flexibility of laying cables and ease of installation are taken into consideration. Although improvement in bending loss characteristics can be achieved by increasing a relative refractive index difference between the core and cladding, an increased relative refractive index difference increases containment of higher-order modes, thereby making cut-off wavelengths in higher-order modes longer.

A hole-assisted holey fiber (HA-HF) has been proposed as a significantly low-loss fiber compared to typical single-mode fibers (hereinafter abbreviated as "SMFs") used in an optical transmission path. A holey fiber is constructed such that a plurality of holes are disposed around its core, and it exhibits a larger relative refractive index difference between the core and the cladding and a lower bending loss characteristic even with small-diameter bending, as compared to conventional SMFs.

However, even through conventional holey fibers can achieve low bending loss, they cannot completely eliminate the tradeoff of a lower bending loss versus a longer cut-off wavelength (see T. Hasegawa, et al, "Novel hole-assisted lightguide fiber exhibiting large anomalous dispersion and low loss below IdB/km", Proc. OFC, PD5, 2001).

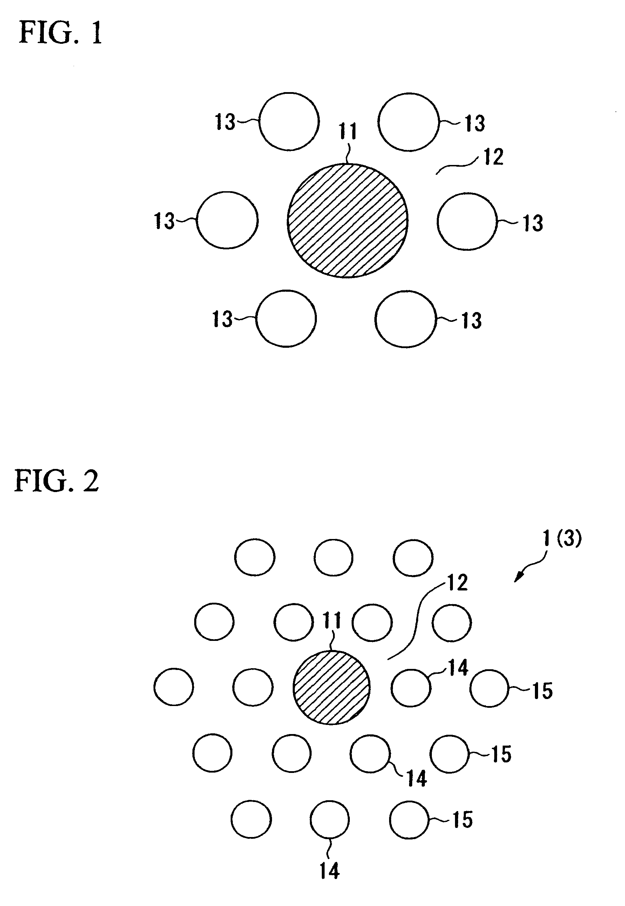

The following types of hole-assisted holey fibers (hereinafter referred to as HAHFs) have been proposed: one in which a plurality of holes are disposed around the core to form one layer of holes, as shown in FIG. 1 (see B. Yao, et al., "Low-loss holey fiber," Proc. 53rd IWCS, pp.135-139, 2004, for example); and another in which a plurality of holes are disposed around the core to form two layers of holes, as shown in FIG. 2 (see T. Hasegawa, et al., "Bending-insensitive single-mode holey fibre with SMF-compatibility for optical wiring applications," ECOC-IOOC 2003 Proc., We2.7.3, 2003, for example).

The type of HAHF shown in FIG. 1 in which holes are arranged to form one layer includes a core 11, a cladding region 12 therearound, the core region having a higher refractive index than that of the cladding region 12, and a plurality (six in the example shown in the figure) of holes 13 provided in the cladding region 12 along a circle concentric around the core region 11. Each of the plurality of holes 13 has the same diameter, and the distances between the center of the core region and the centers of each of the holes 13 are all equal.

The type of HAHF shown in FIG. 2 in which holes are arranged to form two layers includes a core 11, a cladding region 12 therearound, the core region having a higher refractive index than that of the cladding region 12, six inner holes 14 provided in the cladding region 12 along a circle concentric around the core region 11, and twelve outer holes 15 provided outside from the inner holes 14. In the illustrated example, the inner holes 14 and the outer holes 15 are all formed to have the same diameter. Furthermore, in this HAHF, one-half of the outer holes 15 are arranged on lines extended from the center of the core region through the inner holes 14.

Among the above-described conventional HAHFs, although the HAHF shown in FIG. 1 has a simpler structure than the HAHF shown in FIG. 2, obtaining a fiber with a low bending loss $L_B$ and a short cut-off wavelength $\lambda_c$ is limited by a trade-off. More specifically, in order to reduce the bending loss $L_B$, the diameter of the holes should be enlarged so that the ratio of the space occupied by the holes in the cladding region is increased. On the other hand, in order to reduce the cut-off wavelength $\lambda_c$, containment of higher-order modes should be minimized. For this purpose, the space occupancy ratio should be reduced or the holes should be disposed closer to the core region. However, in the structure as shown in FIG. 1, since disposing the holes closer to the core region results in an increased space occupancy ratio, it becomes difficult to achieve both a low bending loss $L_B$ and a short cut-off wavelength $\lambda_C$.

Furthermore, since the HAHF shown in FIG. 2 has the second layer of the holes outside from the holes in the fiber shown in FIG. 1, it permits more flexibility in adjusting the bending loss and the cut-off wavelength than the HAHF shown in FIG. 1. However, a large number of holes, i.e., 18, and a relatively complex structure of this fiber may cause increased production cost.

## SUMMERY OF THE INVENTION

The present invention was conceived in view of the above-mentioned background, and it is directed to provide a low-bending loss multimode holey fiber that is suitable as an optical fiber for house wiring that is associated with bending with low curvature.

In order to achieve the above-mentioned objects, the present invention provides a low-bending loss multimode holey fiber according to claim 1.

In the low-bending loss multimode holey fiber according to the present invention, it is preferable that an absolute value of a group refractive index difference $\Delta n_g$ between a fundamental mode and a next higher-order mode be less than $1 \times 10^{-3}$.

In the low-bending loss multimode holey fiber according to the present invention, it is preferable that a modal dispersion due to multimode propagation be 0.5 ns/km or less when the low-bending loss multimode holey fiber is spliced with an SMF having a step-shaped refractive index profile.

In the low-bending loss multimode holey fiber according to the present invention, it is preferable that a bending loss be 0.1 dB/m or less with a bending diameter $\varphi$ of 10 mm at a wavelength of 1.55 $\mu$m.

In the low-bending loss multimode holey fiber according to the present invention, it is preferable that a fusion splice loss and a mechanical splice loss with a single-mode fiber having a step-shaped core be 0.2 dB or less and 0.4 dB or less, respectively, and a return loss be 40 dB or more at a wavelength of 1.55 $\mu$m when the low-bending loss multimode holey fiber is spliced with a single-mode fiber having a step-shaped core.

In the low-bending loss multimode holey fiber according to the present invention, it is preferable that a fusion splice loss and a mechanical splice loss with a single-mode fiber having a step-shaped core be 0.2 dB or less and 0.4 dB or less, respectively, and a return loss be 40 dB or more at a wavelength of 1.55 $\mu$m when the low-bending loss multimode holey fiber is spliced with a same fiber.

In the low-bending loss multimode holey fiber according to the present invention, it is preferable that the holes surrounding the core region define two layers, the holes in each layer be arranged evenly spaced, and the number of holes in each layer be between 3 and 8.

In the low-bending loss multimode holey fiber according to the present invention, it is preferable that the holes surrounding the core region define two layers, and a diameter of the holes be different from layer to layer.

With the HAHF according to the present invention, a single-mode fiber is obtained which exhibits a short cut-off wavelength $\lambda_C$ and low bending loss $L_B$ with a simplified structure.

In addition to exhibiting a short cut-off wavelength $\lambda_C$ and low bending loss $L_B$, the HAHF according to the present invention can be fusion spliced or mechanically spliced with an SMF with low splice loss. Thereby, it can be applied to long-haul transmission, as well as user's on-site wiring.

In the low-bending loss multimode holey fiber according to the present invention, the core region surrounded by holes includes a first core at the center that is made of a material having a higher refractive index than that of the cladding region, and a second core around the first core, which is made of a material having a refractive index that is different from a refractive index of the first core and higher than that of a material of the cladding region. Thus, it exhibits extremely low bending loss even with a very small bending radius.

The low-bending loss multimode holey fiber according to the present invention has a simplified structure and exhibits very low bending loss, and can be connected with a conventional SMF with very low splice loss. Thus, it can be applied to house wiring in which flexibility of wiring and ease of installation are required, thereby improving the performance of optical communication.

## BRIEF DESCRIPTION OF THE DRAWINGS

FIG. 1 is a cross-sectional view illustrating the principal portion of an HAHF as an example of a conventional HAHF.
FIG. 2 is a cross-sectional view illustrating the principal portion of an HAHF as another example of a conventional HAHF.
FIG. 16 is a graph showing the refractive index profile at a core region of a low-bending loss multimode holey fiber according to the present invention.
FIG. 17 is a schematic diagram illustrating a fifth embodiment of the low-bending loss multimode holey fiber according to the present invention.
FIG. 18 is a schematic diagram illustrating a sixth embodiment of the low-bending loss multimode holey fiber according to the present invention.
FIG. 19 is a schematic diagram illustrating a seventh embodiment of the low-bending loss multimode holey fiber according to the present invention.

FIG. 20 is a graph showing results of Example 6 according to the present invention.

FIG. 21 is a graph showing results of Example 7 according to the present invention.

FIG. 22 is a schematic diagram illustrating an eighth embodiment of the low-bending loss multimode holey fiber according to the present invention.

FIG. 23 is a graph showing results of Example 8 according to the present invention.

DETAILED DESCRIPTION OF THE INVENTION

Hereinafter, various embodiments of the present invention will be described with reference to the drawings.

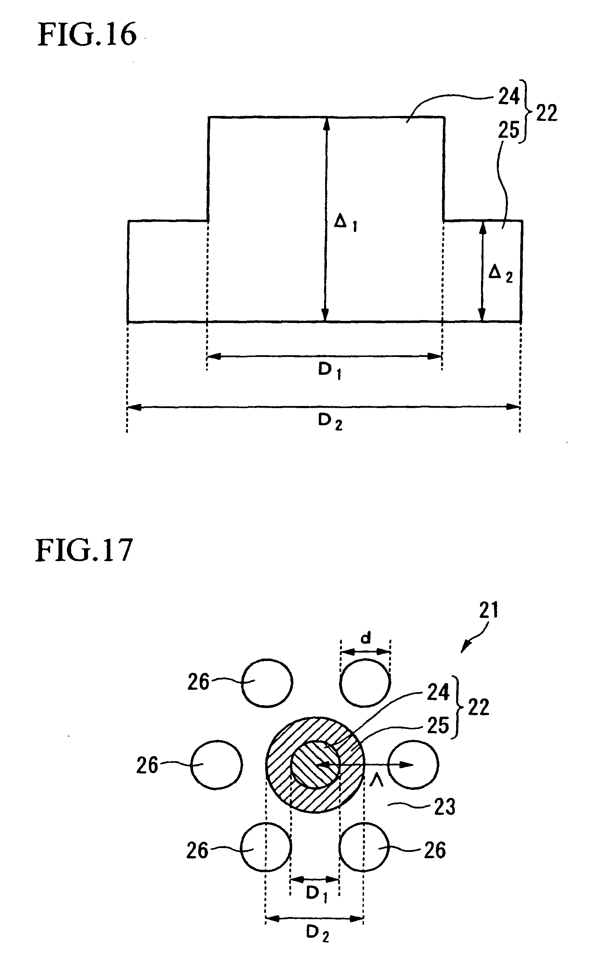

FIG 16 and FIG. 17 are schematic diagrams illustrating a first embodiment of the low-bending loss multimode holey fiber (hereinafter abbreviated as "HF") according to the present invention. FIG. 16 is a graph illustrating a refractive index profile of a core region 22 of the HF, and FIG. 17 is a schematic diagram showing the structure of the HF 21. In these figures, reference numeral 21 notes the HF, reference numeral 22 denotes a core region, reference numeral 23 denotes a cladding region, reference numeral 24 denotes a first core, reference numeral 25 denotes a second core, and reference numerals 26 denote holes.

The HF 21 of this first embodiment is made of silica-based glass, and is a holey fiber that includes a core region 22 having a higher refractive index than that of the cladding region 23 and a plurality of holes 26 around the core region 22. The core region 22 includes a first core 24 at the center that is made of a material having a higher refractive index than that of the cladding region 23, and a second core 25 around the first core 24, which is made of a material having a refractive index that is different from a refractive index of the first core 24 and is higher than that of the cladding region 23. The HF 21 of this embodiment has a structure in which six holes 26 forming a one layer are provided around the core region, as shown in FIG. 17.

In the HF 21, the relative refractive index difference $\Delta_1$ of the first core 24 with respect to the cladding region 23, the diameter $D_1$ of the first core 24, the relative refractive index difference $\Delta_2$ of the second core 25 with respect to the cladding region 23, and the diameter $D_2$ of the second core 25 fall within the following ranges: $0.3\% \leq \Delta_1 \leq 1\%$, $0.1\% \leq \Delta_2 \leq 0.6\%$, $4\ \mu m \leq D_1\ 10\ \mu m$, and $6\ \mu m \leq D_2 \leq 15\ \mu m$.

When the above-described $\Delta_1$, $\Delta_2$, $D_1$, and $D_2$ are in the above-described ranges, it is possible to obtain an HF 21 that has bending loss of 0.1 dB/m or less with a bending diameter $\varphi$ of 10 mm at a wavelength of 1.55 $\mu$m. The HF21 has two or more propagation modes at wavelengths between 1.2 $\mu$m and 1.6 $\mu$m (this number of propagation modes is the number without a degenerate mode that is counted more than once).

Furthermore, it is also possible to obtain an HF 21 that has the absolute value of a group refractive index difference $\Delta n_g$ between the fundamental mode and the next higher-order mode of less than $1 \times 10^{-3}$.

Furthermore, it is possible to obtain an HF 21 that exhibits modal dispersion due to multimode propagation of 0.5 ns/km or less when the HF 21 is spliced with an SMF having a step-shaped refractive index profile.

When splicing in this manner, it is also possible to obtain an HF 21 that exhibits fusion splice loss between the HF 21 and the SMF of 0.2 dB or less, mechanical splice loss of 0.4 dB or less, and return loss of 40 dB or more at a wavelength of 1.55 $\mu$m.

Furthermore, when fusion splicing two HFs 21, it is also possible to obtain an HF 21 that exhibits a fusion splice loss of 0.2 dB or less, mechanical splice loss of 0.4 dB or less when optical connectors are provided to ends of the HFs 21 and the connectors are made to abut each other, and return loss of 40 dB or more at a wavelength of 1.55 $\mu$m.

In this HF 21, the core region 22 surrounded by the holes includes the first core 24 at the center that is made of a material having a higher refractive index than that of the cladding region 23, and a second core 25 around the first core 24, which is made of a material having a refractive index that is different from a refractive index of the first core 24 and is higher than that of the cladding region 23. Thus, it exhibits extremely low bending loss even with a very small bending radius.

This HF 21 has a simplified structure and exhibits very low bending loss, and can be connected with a conventional SMF with very low splice loss. Thus, it can be applied to house wiring in which flexibility of wiring and ease of installation are required, thereby improving the performance of optical communication.

The arrangement of the holes of the HF of the present invention is not limited to six holes in one layer according to the above-described fifth embodiment, and other arrangements may be employed. However, it is preferable that the number of layers of the holes surrounding the core region 22 be two or less, the holes in each layer be arranged evenly spaced, and the number of holes in each layer be between 3 and 8. Hereinafter, other arrangements of the holes will be illustrated in second to fourth embodiments.

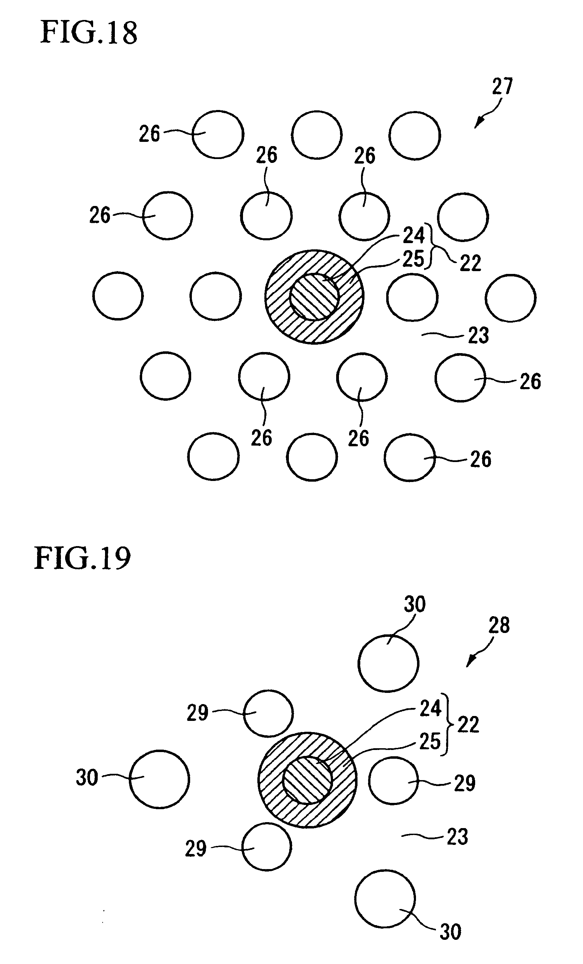

FIG. 18 is a diagram illustrating a second embodiment of the HF according to the present invention. The HF 7 of this embodiment is constructed to have the same elements as those of the HF 21 of the above-described embodiment, and to further include twelve holes 26 that define a second layer around the six holes 26 that define the first layer, coming to eighteen holes 26 in the two layers in total.

The HF 7 of this embodiment is capable of providing the same effects as those of the HF 21 of the above-described embodiment.

FIG. 19 is a diagram illustrating a third embodiment of the HF according to the present invention. An HF 28 of this embodiment is characterized in that it includes a core region 22 having the first core 24, the second core 25 provided therearound, similar to in the HF 21 of the above-described first embodiment, and the two layers of the inner and outer layers of holes 29 and 30 surrounding the core region 22, and that the hole diameter of the inner holes 29 is different from the hole diameter of the outer holes 210. There are three inner holes 29 and three outer holes 30 (six holes in the two layers), and the three holes in each layer have the same hole diameter and the same distance from the core center to the center of the hole.

The HF 28 of this embodiment is capable of providing the same effects as those of the HF 21 of the above-described first embodiment.

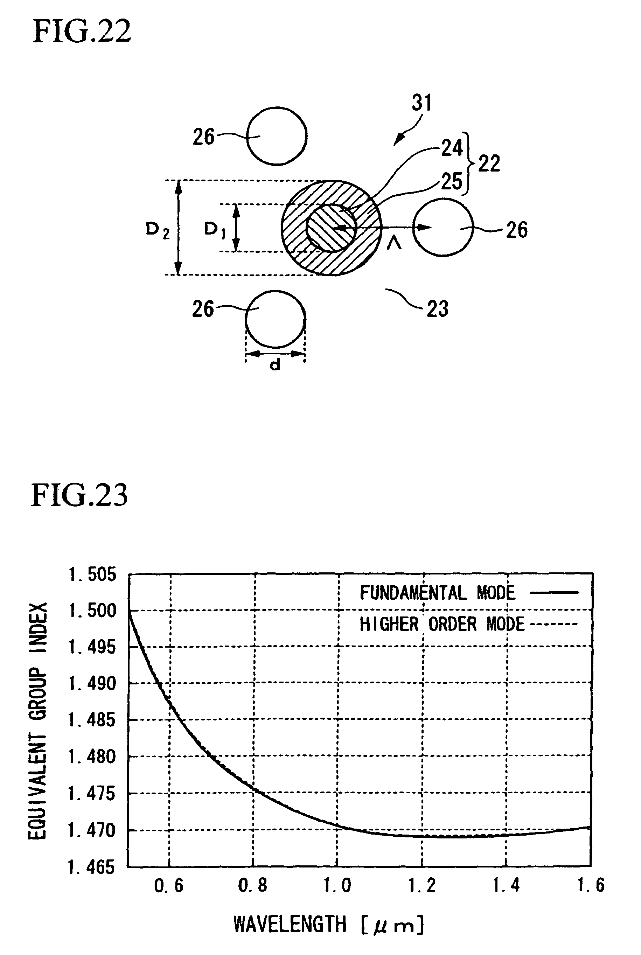

FIG. 22 is a diagram illustrating a fourth embodiment of the HF according to the present invention. The HF 28 of this embodiment includes a core region 22 having the first core 24, the second core 25 provided therearound, similar to in the HF 21 of the above-described first embodiment, and three holes 26 surrounding the core region 22 (three holes in one layer).

The HF 31 of this embodiment is capable of providing the same effects as those of the HF 21 of the above-described first embodiment.

Example 1

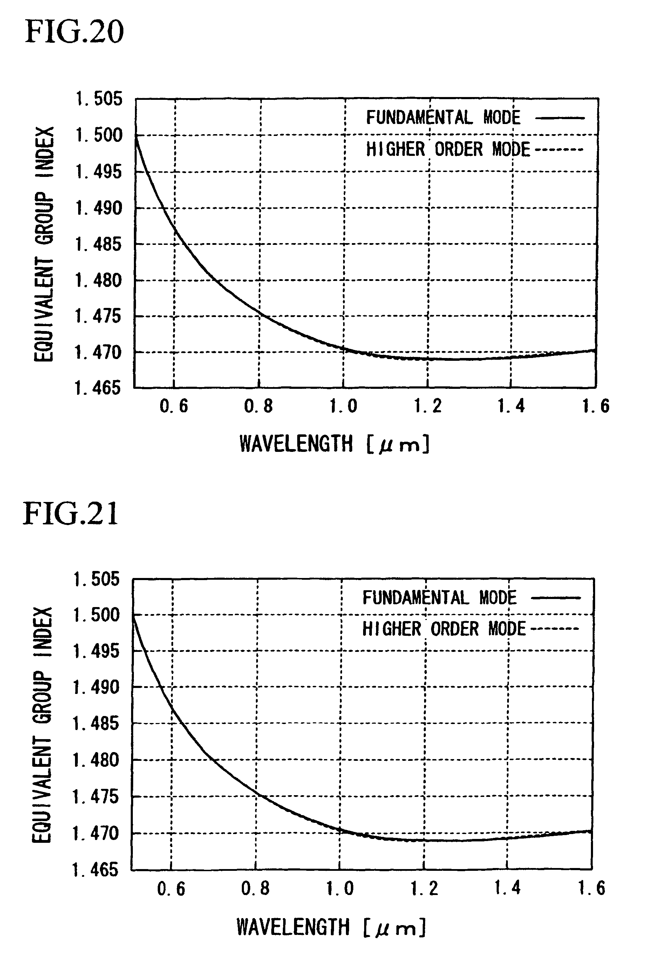

The HF 21 shown in FIG. 17 having six holes in one layer was fabricated, and had the refractive index profile shown in FIG. 16; a core region with $D_1 = 6$ $\mu$m, $D_2 = 12$ $\mu$m, $\Delta_1 = 0.5\%$, and $\Delta_2 = 0.3\%$; a hole diameter "d" of 9 $\mu$m; and a distance A from the center of the core region to the center of a hole of 13 $\mu$m. The measurement results of equivalent group refractive indices in the fundamental mode and a higher-order mode of this HF 21 are shown in FIG. 20. As shown in the figure, the group refractive index difference $\Delta n_g$ ($|n_{gf} - n_{gh}|$) between the two modes was $2 \times 10^{-4}$ or lower at wavelengths between 1.2 and 1.6 $\mu$m, wherein $n_{gf}$ and $n_{gh}$ represent group refractive indices of the fundamental mode and the higher-order mode, respectively. Furthermore, the upper limit of an increase in pulse signals caused by modal dispersion due to multimode propagation can be evaluated using the following Equation (1)

$$\Delta \tau = \frac{L}{c} \Delta n_g \qquad \cdots (1)$$

(in the above Equation, L represents the propagation distance and "c" represents the speed of light). In this case, degradation of signals due to modal dispersion is 0.7 ns/km or less. Since a fiber is used after being connected with an SMF in actual application, higher-order modes are not substantially pumped at all. Therefore, the actual degradation of signals due to modal dispersion was 0.1 ns/km or less.

The test-fabricated HF 21 exhibited bending loss of 0.02 dB/m with a bending diameter $\varphi$ of 10 mm at a wavelength of 1.55 $\mu$m. Furthermore, in HF 21, when the holes 26 were collapsed upon fusion splicing, it could be connected with an SMF with very low loss since it has a mode field diameter (MFD) of about 10 $\mu$m at a wavelength of 1.55 $\mu$m, which is a comparable level to that of a conventional SMF. Splice loss was low at a wavelength of 1.55 $\mu$m when the HF 21 and an SMF were actually connected, with fusion splice loss of about 0.1 dB and mechanical splice loss of about 0.2 dB when optical connectors were provided to ends of the fibers and the connectors were made to abut each other to connect them.

Example 2

The HF 21 shown in FIG. 17 having six holes in one layer was fabricated, and had the refractive index profile shown in FIG. 16; a core region with $D_1 = 5.6$ $\mu$m, $D_2 = 11.2$ $\mu$m, $\Delta_1 = 0.5\%$, and $\Delta_2 = 0.3\%$; a hole diameter "d" of 7 $\mu$m; and a distance A from the center of the core region to the center of a hole of 11 $\mu$m. The measurement results of equivalent group refractive indices in the fundamental mode and a higher-order mode of this HF 21 are shown in FIG. 21. As shown in the figure, the group refractive index difference $\Delta n_g$ between the two modes was $3 \times 10^{-4}$ or lower at wavelengths between 1.2 and 1.6 $\mu$m. Actual degradation of signals due to modal dispersion was 0.1 ns/km or less.

The test-fabricated HF 21 exhibited bending loss of 0.02 dB/m with a bending diameter $\varphi$ of 10 mm at a wavelength of 1.55 $\mu$m. Furthermore, splice loss was low at a wavelength of 1.55 $\mu$m, with fusion splice loss of about 0.2 dB and mechanical splice loss of about 0.3 dB when optical connectors were provided to ends of the fibers and the connectors were made to abut each other to connect them.

Example 3

The HF 31 shown in FIG. 22 having six holes in one layer was fabricated, and had the refractive index profile shown in FIG. 16; a core region with $D_1$ = 6 $\mu$m, $D_2$ = 12 $\mu$m, $\Delta_1$ = 0.5%, and $\Delta_2$ = 0.3%; a hole diameter "d" of 10 $\mu$m; and a distance A from the center of the core region to the center of a hole of 12 $\mu$m. The measurement results of equivalent group refractive indices in the fundamental mode and a higher-order mode of this HF 31 are shown in FIG. 23. As shown in the figure, the group refractive index difference $\Delta n_g$ between the two modes was $4 \times 10^{-4}$ or lower at wavelengths between 1.2 and 1.6 $\mu$m.

Actual degradation of signals due to modal dispersion was 0.1 ns/km or less.

The test-fabricated HF 31 exhibited bending loss of 0.03 dB/m with a bending diameter $\varphi$ of 10 mm at a wavelength of 1.55 $\mu$m. Furthermore, splice loss was low at a wavelength of 1.55 $\mu$m, with fusion splice loss of about 0.1 dB and mechanical splice loss of about 0.2 dB when optical connectors were provided to ends of the fibers and the connectors were made to abut each other to connect them.

While preferred embodiments of the invention have been described and illustrated above, it should be understood that these are examples of the invention and are not to be considered as limiting. Additions, omissions, substitutions, and other modifications can be made without departing from the scope of the present invention. Accordingly, the invention is not to be considered as being limited by the foregoing description, and is only limited by the scope of the appended claims.

## Claims

1. A low-bending loss multimode holey fiber comprising:

    a core region (22);
    a cladding region (23); and
    a plurality of holes (26, 29, 30) surrounding the core region,

    wherein the core region has a higher refractive index than that of the cladding region, the core region comprises a first core (24) at a center that is made of a material having a higher refractive index than that of the cladding region, and a second core (25) around the first core, which is made of a material having a refractive index that is different from a refractive index of the first core and higher than that of a material of the cladding region, **characterized in that**

    a relative refractive index difference $\Delta 1$ of the first core with respect to the cladding region, a diameter D1 of the first core, a relative refractive index difference $\Delta 2$ of the second core with respect to the cladding region, and a diameter D2 of the second core fall within the following ranges: $0.3\% \leq \Delta 1 \leq 1\%$, $0.1\% \leq \Delta 2 \leq 0.6\%$, $4$ $\mu$m $\leq D 1 \leq 10$ $\mu$m, and $6$ $\mu$m $\leq D2 \leq 15$ $\mu$m, and the fiber has two or more propagation modes at wavelengths between 1.2 $\mu$m and 1.6 $\mu$m (the number of propagation modes being the number without a degenerate mode that is counted more than once).

2. The low-bending loss multimode holey fiber according to claim 1, wherein an absolute value of a group refractive index difference $\Delta n_g$ between a fundamental mode and a next higher-order mode is less than $1 \times 10^{-3}$.

3. The low-bending loss multimode holey fiber according to claim 1, wherein a modal dispersion due to multimode propagation is 0.5 ns/km or less when the low-bending loss multimode holey fiber is spliced with an SMF having a step-shaped refractive index profile.

4. The low-bending loss multimode holey fiber according to claim 1, wherein a bending loss is 0.1 dB/m or less with a bending diameter $\varphi$ of 10 mm at a wavelength of 1.55 $\mu$m.

5. The low-bending loss multimode holey fiber according to claim 1, wherein a fusion splice loss and a mechanical splice loss with a single-mode fiber having a step-shaped core are 0.2 dB or less and 0.4 dB or less, respectively, and a return loss is 40 dB or more at a wavelength of 1.55 $\mu$m when the low-bending loss multimode holey fiber is spliced with a single-mode fiber having a step-shaped core.

6. The low-bending loss multimode holey fiber to claim 1, wherein a fusion splice loss and a mechanical splice loss with a single-mode fiber having a step-shaped core are 0.2 dB or less and 0.4 dB or less, respectively, and a return loss is 40 dB or more at a wavelength of 1.55 $\mu$m when the low-bending loss multimode holey fiber is spliced with a same fiber.

7. The low-bending loss multimode holey fiber according to claim 1. wherein the holes surrounding the core region define two layers, the holes in each layer are arranged evenly spaced, and the number of holes in each layer is between 3 and 8.

8. The low-bending loss multimode holey fiber according to claim 1, wherein the holes surrounding the core region define two layers, and a diameter of the holes is different from layer to layer.

**Patentansprüche**

1. Eine multimodus mikrostrukturierte Faser mit geringem Krümmungsverlust umfassend:

   einen Kernbereich (22);
   einen Verkleidungsbereich (23); und
   eine Vielzahl von den Kernbereich umgebenden Löchern (26, 29, 30),

   wobei der Kernbereich einen höheren Brechungsindex als der Verkleidungsbereich aufweist, wobei der Kernbereich einen ersten Kern (24) in der Mitte umfasst, der aus einem Material hergestellt ist, das einen höheren Brechungsindex als der Verkleidungsbereich aufweist, und einen zweiten Kern (25) um den ersten Kern umfasst, welcher aus einem Material mit einem Brechungsindex hergestellt ist, der unterschiedlich ist von dem Brechungsindex des ersten Kerns und größer ist als der des Materials des Verkleidungsbereiches,
   **dadurch gekennzeichnet, dass**
   eine relative Brechungsindexdifferenz $\Delta1$ des ersten Kernes in Bezug auf den Verkleidungsbereich, ein Durchmesser D1 des ersten Kernes, eine relative Brechungsindexdifferenz $\Delta2$ des zweiten Kernes in Bezug auf den Verkleidungsbereich, und ein Durchmesser D2 des zweiten Kernes in die folgenden Bereiche fällt: $0,3\% \leqq \Delta1 \leqq 1\%$, $0,1\% \leqq \Delta2 \leqq 0,6\%$, $4\mu m \leqq D1 \leqq 10\mu m$ und $6\mu m \leqq D2 \leqq 15\mu m$, und
   die Faser zwei oder mehrere Übertragungsmodi bei Wellenlängen zwischen $1,2\mu m$ und $1,6\mu m$ aufweist (die Anzahl der Übertragungsmodi entspricht der Anzahl ohne einen degenerierten Modus, der mehr als einmal gezählt wird).

2. Multimodus mikrostrukturierte Faser mit geringem Krümmungsverlust nach Anspruch 1, wobei ein absoluter Wert einer Gruppenbrechungsindexdifferenz $\Delta ng$ zwischen einem basalen Modus und einem Modus, der nächst höheren Ordnung kleiner als $1 \times 10^{-3}$ ist.

3. Multimodus mikrostrukturierte Faser mit geringem Krümmungsverlust nach Anspruch 1, wobei eine modale Dispersion aufgrund der multimodalen Ausbreitung 0,5 ns/km oder weniger ist, wenn die multimodus mikrostrukturierte Faser mit geringem Krümmungsverlust mit einem SMF mit einem stufenförmigen Brechungsindexprofil verbunden ist.

4. Multimodus mikrostrukturierte Faser mit geringem Krümmungsverlust nach Anspruch 1, wobei ein Krümmungsverlust 0,1 dB/m oder weniger ist, mit einem Krümmungsdurchmesser $\Phi$ von 10mm bei einer Wellenlänge von $1,55\mu m$ ist.

5. Multimodus mikrostrukturierte Faser mit geringem Krümmungsverlust nach Anspruch 1, wobei ein Fusionsverbindungsverlust und ein mechanischer Verbindungsverlust mit einer singulären Modus Faser mit einem stufenförmigen Kern jeweils 0,2 dB oder weniger und 0,4 dB oder weniger sind, und ein Returnverlust 40 dB oder mehr bei einer Wellenlänge von $1,55\mu m$ ist, wenn die multimodus mikrostrukturierte Faser mit geringem Krümmungsverlust mit einer singulären Modus Faser mit einem stufenförmigen Kern verbunden ist.

6. Multimodus mikrostrukturierte Faser mit geringem Krümmungsverlust nach Anspruch 1, wobei ein Fusionsverbindungsverlust und ein mechanischer Verbindungsverlust mit einer singulären Modusfaser mit einem abgestuften Kern jeweils 0,2 dB oder weniger und 0,4 dB oder weniger sind, und ein Returnverlust 40 dB oder mehr bei einer Wellenlänge von $1,55\mu m$, wenn die multimodus mikrostrukturierte Faser mit geringem Krümmungsverlust mit einer gleichen Faser verbunden ist.

7. Multimodus mikrostrukturierte Faser mit geringem Krümmungsverlust nach Anspruch 1, wobei die den Kernbereich umgebenden Löcher zwei Schichten definieren, wobei die Löcher in jeder Schicht gleichmäßig beabstandet sind, und die Anzahl der Löcher in jeder Schicht zwischen 3 und 8 ist.

**8.** Multimodus mikrostrukturierte Faser mit geringem Krümmungsverlust nach Anspruch 1, wobei die den Kernbereich umgebenden Löcher zwei Schichten definieren, und ein Durchmesser der Löcher von Schicht zu Schicht unterschiedlich ist.

## Revendications

**1.** Fibre à trous multimode à faible perte par courbure comprenant :

une région de coeur (22) ;
une région de gaine (23) ; et
une pluralité de trous (26, 29, 30) entourant la région de coeur,
dans laquelle la région de coeur a un indice de réfraction supérieur à celui de la région de gaine, la région de coeur comprend un premier coeur (24) au centre, qui est réalisé en un matériau ayant un indice de réfraction supérieur à celui de la région de gaine, et un deuxième coeur (25) autour du premier coeur, qui est réalisé en un matériau ayant un indice de réfraction qui est différent d'un indice de réfraction du premier coeur et supérieur à celui d'un matériau de la région de gaine, **caractérisée en ce que**
une différence relative d'indice de réfraction $\Delta 1$ du premier coeur par rapport à la région de gaine, un diamètre D 1 du premier coeur, une différence relative d'indice de réfraction $\Delta 2$ du deuxième coeur par rapport à la région de gaine, et un diamètre D2 du deuxième coeur tombent dans les plages suivantes : $0,3\% \leq \Delta 1 \leq 1\%$, $0,1\% \leq \Delta 2 \leq 0,6\%$, $4\mu m \leq D1 \leq 10\mu m$, et $6\mu m \leq D2 \leq 15\mu m$, et
la fibre a deux modes de propagation ou plus à des longueurs d'onde entre $1,2~\mu m$ et $1,6~\mu m$ (le nombre de modes de propagation étant le nombre sans un mode dégénéré qui est compté plusieurs fois).

**2.** Fibre à trous multimode à faible perte par courbure selon la revendication 1, dans laquelle une valeur absolue d'une différence d'indice de réfraction de groupe $\Delta ng$ entre un mode fondamental et un mode d'ordre plus élevé suivant est inférieure à $1 \times 10^{-3}$.

**3.** Fibre à trous multimode à faible perte par courbure selon la revendication 1, dans laquelle une dispersion de mode due à une propagation multimode est de 0,5 ns/km ou moins lorsque la fibre à trous multimode à faible perte par courbure est raccordée à une SMF ayant un profil d'indice de réfraction en forme de gradin.

**4.** Fibre à trous multimode à faible perte par courbure selon la revendication 1, dans laquelle une perte par courbure est de 0,1 dB/m ou moins avec un diamètre de courbure $\varphi$ de 10 mm à une longueur d'onde de $1,55~\mu m$.

**5.** Fibre à trous multimode à faible perte par courbure selon la revendication 1, dans laquelle une perte d'épissure par fusion et une perte d'épissure mécanique avec une fibre monomode ayant un coeur en forme de gradin sont respectivement de 0,2 dB ou moins et de 0,4 dB ou moins, et une perte par retour est de 40 dB ou plus à une longueur d'onde de $1,55~\mu m$ lorsque la fibre à trous multimode à faible perte par courbure est raccordée à une fibre monomode ayant un coeur en forme de gradin.

**6.** Fibre à trous multimode à faible perte par courbure selon la revendication 1, dans laquelle une perte d'épissure par fusion et une perte d'épissure mécanique avec une fibre monomode ayant un coeur en forme de gradin sont respectivement de 0,2 dB ou moins et de 0,4 dB ou moins, et une perte de retour est de 40 dB ou plus à une longueur d'onde de $1,55~\mu m$ lorsque la fibre à trous multimode à faible perte par courbure est raccordée à une même fibre.

**7.** Fibre à trous multimode à faible perte par courbure selon la revendication 1, dans laquelle les trous entourant la région de coeur définissent deux couches, les trous dans chaque couche sont agencés avec un espacement uniforme, et le nombre de trous dans chaque couche est entre 3 et 8.

**8.** Fibre à trous multimode à faible perte par courbure selon la revendication 1, dans laquelle les trous entourant la région de coeur définissent deux couches, et un diamètre des trous est différent d'une couche à l'autre.

## FIG. 1

## FIG. 2

# FIG.16

# FIG.17

## FIG.18

## FIG.19

FIG.20

FIG.21

# FIG.22

# FIG.23

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2004205819 A
- JP 2004279453 A

### Non-patent literature cited in the description

- **T. Hasegawa et al.** Novel hole-assisted lightguide fiber exhibiting large anomalous dispersion and low loss below IdB/km. *Proc. OFC, PD5,* 2001
- **B. Yao et al.** Low-loss holey fiber. *Proc. 53rd IWCS,* 2004, 135-139
- **T. Hasegawa et al.** Bending-insensitive single-mode holey fibre with SMF-compatibility for optical wiring applications. *ECOC-IOOC 2003 Proc., We2.7.3,* 2003